# EUROPEAN PATENT APPLICATION

(11) **EP 4 825 685 A1**
(43) Date of publication of application: **21.10.2026**
(21) Application number: 25171266.7
(22) Date of filing: 17.04.2025
(51) Int. Cl.: B60W 30/14, B60W 30/18, B60W 50/00

(54) **A METHOD FOR A CONTROL SYSTEM FOR CONTROLLING A VEHICLE SPEED WHEN THE VEHICLE TRAVELS IN AT LEAST ONE CURVE, A CONTROL SYSTEM, AND A VEHICLE COMPRISING THE CONTROL SYSTEM**

(71) Applicant: Scania CV AB, 151 87 Södertälje (SE)
(72) Inventor: VESTGÖTE, Karl, 611 63 Nyköping (SE); DELLRUD, Jan, 646 32 Gnesta (SE); STAMP, Alexander, 141 63 Huddinge (SE); SANDSTEDT, Henrik, 129 57 Hägersten (SE); HELD, Manne, 791 56 Falun (SE); ALENIUS, Mikael, 141 72 Segeltorp (SE)
(74) Representative: Scania CV AB

(57) **Abstract**

A method (200) of a control system (550) for controlling a vehicle speed v of a vehicle (500) when the vehicle (500) travels in at least one curve is presented.

The method comprises:
- controlling (240), based on a reference speed v_{ref} provided by a curve speed cruise control system (551) of the vehicle (500) and on a first driver input (11) indicating that the reference speed v_{ref} is too high, the vehicle speed v towards a reduced reference speed V_{ref_red} during a limited time period (T);
wherein:
- the reduced reference speed V_{ref_red} is lower than the reference speed V_{ref}; and
- the curve speed cruise control system (551) is unaffected by the first driver input (I1).

Hereby, a driver comfort is increased and the fuel and/or energy consumption is reduced.

## Description

### Technical field

The present invention relates to vehicle speed control and more specifically to a method for controlling a vehicle speed in a curve, to a control system configured for performing the speed control, and to a vehicle comprising the control system. The present invention also relates to a computer program and a computer-readable medium executing the method.

### Background

The following background description constitutes a description of the background to the present invention, which does not, however, necessarily have to constitute prior art.

Vehicles of today are often equipped with a speed/cruise control system, which is configured to control the speed of the vehicle in a fuel and/or energy efficient manner. The driver of the vehicle here chooses a set speed vₛₑₜ, and the speed/cruise control system then controls the vehicle speed based on this set speed vₛₑₜ and possibly also based on other parameters, such that a good fuel or energy economy, i.e. a low fuel or energy consumption, is provided for the vehicle.

There are today many types of speed/cruise control systems, in which various kinds of information/parameters are utilized as a basis for the control of the vehicle speed. Generally, the speed/cruise control systems of today are designed to provide a more fuel and/or energy efficient vehicle speed control than a driver would be able to provide by manually controlling the speed of the vehicle. The modern speed/cruise control systems may for example have access to additional information which is unknown to the driver, such as slope/inclination angles and/or information related to parameters not being visible for the driver, e.g. road properties behind crests or curves. Such additional information may be utilized for more efficiently controlling the vehicle speed than what is possible with manual speed control.

### Brief description of the invention

When driving in curves, a curve speed cruise control system may be utilized for controlling the vehicle speed v. Such a curve speed cruise control system may then for example control the vehicle speed based on at least a curvature of the road in the curve, such that the vehicle speed is reduced if the curve is sharp. In some situations, however, the vehicle speed resulting from the control of the curve speed cruise control system may be too high for the driver to feel comfortable when the vehicle is travelling in the curve. This could be due to factors and/or situations that the curve speed cruise control system is unaware of, and thus cannot base its decisions on.

For example, if the curve speed cruise control system does not know of vegetation, buildings or infrastructure entities adjacent to the road at the curve, or does not know of a crest of the road in the curve, other vehicles or bicycles in front of the vehicle in the curve and/or a poor weather condition at the curve, the vehicle speed being provided by the curve speed cruise control system might be experienced as being too high for the driver of the vehicle. Thus, the driver may be uncomfortable when travelling at the vehicle speed regulated by the curve speed cruise control system. If the driver is uncomfortable at the regulated vehicle speed, a natural reaction would be to deactivate the speed/cruise control function and thus the curve speed cruise control system, e.g. by braking the vehicle or by actively turning the speed/cruise control function off.

If the speed/cruise control function is deactivated, the fuel or energy consumption generally increases, since it is difficult for a driver to manually control the vehicle speed as efficiently as the speed/cruise control systems of today can control it. Also, by actively and unnecessary braking the vehicle, kinetic energy is always wasted. It should be noted that there are some energy losses also when regenerative braking us used.

It is therefore an objective of the present invention to provide a vehicle speed control such that these problems are at least partly solved.

According to a first aspect of the present invention, the objective is achieved through a method of a control system for controlling a vehicle speed v of a vehicle when the vehicle travels in at least one curve,
the method comprising:
- controlling, based on a reference speed v_{ref} provided by a curve speed cruise control system of the vehicle and on a first driver input indicating that the reference speed v_{ref} is too high, the vehicle speed v towards a reduced reference speed v_{ref_red} during a limited time period;
wherein:
- the reduced reference speed v_{ref_red} is lower than the reference speed v_{ref}; and
- the curve speed cruise control system is unaffected by the first driver input.

Thus, if the driver feels that the vehicle speed v regulated by the curve speed cruise control system is too high for whatever reason, the driver may easily and temporarily reduce the vehicle speed v even further in the curve. This driver influenced further reduction of the vehicle speed v may for example be initiated because the visibility in the curve is limited, i.e. because the driver cannot see through the curve, due to for example vegetation, buildings, weather conditions, such as fog, heavy rain or snow limiting the visibility. The temporal additional reduction of the vehicle speed v in the curve may also be initiated by the driver if pedestrians, cyclists or other drivers behave erratically, and thereby causes dangerous traffic situations. Such situations are unknown for the curve speed cruise control system, and are not take into consideration by the curve speed cruise control system when controlling the vehicle speed in the curve.

In such cases when the driver feels that the vehicle speed regulated by the curve speed cruise control system is too high, the driver may, thanks to the herein presented speed control, temporarily reduce the vehicle speed v even further in the curve, without deactivating the curve speed cruise control system. Thus, the curve speed cruise control system is kept running, but the vehicle speed v is efficiently controlled to be temporarily reduced below the vehicle speed v regulated by the curve speed cruise control system. Hereby, the run/activation time of the speed/cruise control function and thus also the curve speed cruise control system is maximized, because the risk that the driver deactivates the speed/cruise control function is considerably reduced, since the driver feels that he or she is in control of the vehicle.

Thus, a short additional vehicle speed reduction being initiated/triggered by the first driver input is provided, which makes the driver more comfortable when driving in curves and which reduces the risk for deactivation of the of the speed/cruise control function. Also, a flexible and easily handled curve speed cruise control system is provided. The overall fuel and/or energy consumption is hereby reduced, since the overall usage of speed/cruise control function will increase.

There may be one or more fuel and/or energy saving actions that would be possible for the speed/cruise control function to perform directly after the at least one curve. However, such actions will of course only be performed if the speed/cruise control function is still active when the vehicle leaves the at least one curve. For example, there might be a downhill after the at least one curve, where the downhill is not visible through the at least one curve. In such a situation, if the driver would deactivate the speed/cruise control function, which was likely when conventional solutions were used, the driver himself would thus not know that there is a downhill coming up. The driver would therefore keep the vehicle speed unchanged through the at least one curve, or would even increase the vehicle speed at the end of the at least one curve. However, if the speed/cruise control function stays active through the whole at least one curve, as is likely when the herein presented solution is utilized, the speed/cruise control function will reduce the vehicle speed at the end of the at least one curve, based on its knowledge of the upcoming downhill, such that the vehicle speed is reduced before the downhill.

Further, the presented vehicle speed control in curves allows the driver to easily interact with the curve speed cruise control system to slow down the vehicle if certain situations occur in the curve that make the driver feel that the vehicle speed is too high, and then to resume to the curve speed cruise control system operation when the situation is solved, without turning the curve speed cruise control system off and on.

When the driver easily interacts with the curve speed cruise control system in this way, the curve speed cruise control system may be configured to control the vehicle speed such that the vehicle travels at a higher average speed, since the driver can easily manually reduce the vehicle speed further if necessary. Hereby, it is avoided that the curve speed cruise control system is configured to generally reduce the vehicle speed further in all curves. Such a lower vehicle speed curve speed cruise control system configuration would increase fuel and/or energy consumption, since it would result in more braking and more accelerations. Such a lower vehicle speed curve speed cruise control system configuration would also increase the risk for deactivation of the curve speed cruise control system. Thus, the herein presented vehicle speed control for curves reduces the fuel and/or energy consumption.

According to an embodiment, the method further comprises:
- receiving the reference speed v_{ref} from the curve speed cruise control system;
- receiving the first driver input from an input arrangement; and
- determining the reduced reference speed v_{ref_red} based on:
   -- the received reference speed v_{ref}; and
   -- the received first driver input.

Thus, the driver has the feeling of being in charge of the speed control of the vehicle, because the vehicle speed through the curves may be easily influenced by the first driver input such that it is reduced when the driver thinks it is too high. Hereby, a potential fear of the driver for too high vehicle speeds and loss of control over the vehicle is considerably reduced.

According to an embodiment,
- the first driver input is associated with a driver brake demand magnitude;
- the reference speed v_{ref} is associated with a curve speed cruise control system brake demand magnitude; and
- the reduced reference speed v_{ref_red} is determined based also on one in the group of:
   - a sum of the driver brake demand magnitude and the curve speed cruise control system brake demand magnitude;
   - a highest magnitude of the driver brake demand magnitude and the curve speed cruise control system brake demand magnitude; and
   - a ratio R between a driver influenced speed v_{driver} resulting from a completed braking of the vehicle utilizing the driver brake demand magnitude and the reference speed v_{ref}; R = v_{driver} / v_{ref}.

There are a number of different ways for the driver to influence the vehicle speed through curves. One such way is to activate some kind of braking input arrangement to input a driver brake demand. Such a driver brake demand may be utilized in various ways to provide the reduced reference speed v_{ref_red} towards which the vehicle speed should be controlled in the curve. The different options for how to determine the reduced reference speed v_{ref_red} may be suitable for utilization in different driving situations, in different types of curves and/or for different driver types. The presented vehicle speed control may therefore be flexibly implemented.

According to an embodiment, the first driver input is provided by utilization of at least one braking input arrangement of the vehicle.

For a driver of the vehicle, it is generally an intuitive measure to activate a braking input arrangement if the vehicle speed is perceived as being too high. Thus, to utilize such a braking input arrangement to further reduce the vehicle speed in curves will be easily learned and adopted by drivers.

According to an embodiment, the at least one braking input arrangement comprises one or more in the group of:
- an auxiliary brake lever; and
- a brake pedal.

Vehicles of today are more or less always equipped with both brake pedals arranged for control of service brakes and auxiliary brake levers arranged for control of one or more auxiliary brakes. The herein presented vehicle speed control may therefore easily be implemented in vehicles of today, with little additional complexity.

According to an embodiment, the method further comprises:
- controlling, based on sensor information provided by one or more onboard sensors, the vehicle speed v towards the reference speed v_{ref}, wherein the sensor information indicates that the vehicle has passed a sharpest point of the at least one curve and that an end of the limited time period thereby has been reached.

Hereby, an automatic return to control of the vehicle speed towards the reference speed v_{ref} is provided after the vehicle has passed the sharpest point of the curve, which is safely identified based on onboard sensors also if there is no internet coverage and/or map data for the road. It is likely that the driver feels comfortable to increase the vehicle speed again after the sharpest point of the curve has been passed, wherefore such a control will be easily accepted by the driver.

According to an embodiment, the one or more onboard sensors comprise at least one in the group of:
- a camera;
- a radar system;
- an ultrasonic system; and
- a lidar system.

Thus, the herein presented control of the vehicle speed may be performed based on information provided by a large number of onboard sensors, and may therefore be implemented in essentially any vehicle of today.

According to an embodiment, the method further comprises:
- controlling, based on positioning information and map data, the vehicle speed v towards the reference speed v_{ref}, wherein the positioning information and map data indicate that the vehicle has passed a sharpest point of the at least one curve and that an end of the limited time period thereby has been reached.

Hereby, an automatic return to control of the vehicle speed towards the reference speed v_{ref} is provided after the vehicle has passed the sharpest point of the curve, which is determined based on positioning information and map data, both being very accurate and reliable today. It is likely that the driver feels comfortable to increase the vehicle speed again after the sharpest point of the curve has been passed, wherefore such a control will be easily adopted/accepted by the driver.

According to an embodiment, the method further comprises:
- controlling, based on a second driver input, the vehicle speed v towards the reference speed v_{ref}, wherein the second driver input indicates that an end of the limited time period has been reached.

Hereby, a manually initiated return to control of the vehicle speed towards the reference speed v_{ref} is provided when the driver decides that it is suitable. Hereby, the driver feels that he is completely in charge of the vehicle speed control in the curve.

According to an embodiment, the second driver input is provided by utilization of at least one input arrangement in the group of:
- an accelerator pedal;
- a resume button of a cruise control input arrangement of the vehicle;
- an increase set speed button of a cruise control input arrangement of the vehicle;
- a physical button of the vehicle;
- a digital button of the vehicle; and
- a voice input arrangement of the vehicle.

Thus, a large number of input arrangements may be utilized for receiving the second driver input. Hereby, the presented vehicle speed control in curves may be easily implemented in essentially any vehicle of today, with a limited additional complexity.

According to an embodiment, the method further comprises:
- controlling, based on vehicle-to-everything information, the vehicle speed v towards the reference speed v_{ref}, wherein the vehicle-to-everything information indicates that an end of the limited time period has been reached.

By utilizing vehicle-to-everything information, determinations and/or observations made by e.g. other vehicles and/or systems may be taken advantage of. For example, if a visibility though a curve has already been determined by another vehicle having travelled through the curve at an earlier time instant, this determined visibility may be transmitted to and utilized by the vehicle when it subsequently travels through the curve. If this vehicle-to-everything visibility information indicates that the visibility is poor in the beginning of the curve, but improves at the end of the curve, the vehicle speed v may be automatically controlled towards the reference speed v_{ref} again at the end of the curve. Such an automatic vehicle speed control would also resemble a speed control that would be manually performed by the driver. The driver hereby feels safe when travelling through the curve.

According to an embodiment, the curve speed cruise control system stays active during the limited time period.

Thus, if the driver feels that the vehicle speed v regulated by the curve speed cruise control system is too high, the driver may temporarily reduce the vehicle speed v even further in the curve, without deactivating the curve speed cruise control system. The curve speed cruise control system constantly keeps running during the temporary additional reduction in vehicle speed v, whereby the total run time of the speed/cruise control function and thus also the curve speed cruise control system is maximized.

According to a second aspect of the present invention, the objective is achieved through a control system configured to control a vehicle speed v of a vehicle when the vehicle travels in at least one curve, wherein the control system is configured to:
- control, based on a reference speed v_{ref} provided by a curve speed cruise control system of the vehicle and on a first driver input indicating that the reference speed v_{ref} is too high, the vehicle speed v towards a reduced reference speed v_{ref_red} during a limited time period;
wherein:
- the reduced reference speed v_{ref_red} is lower than the reference speed v_{ref}; and
- the curve speed cruise control system is unaffected by the first driver input.

The control system has corresponding advantages as mentioned for the method according to the first aspect.

According to a third aspect of the present invention, the objective is achieved through a vehicle comprising a herein described control system.

The vehicle has corresponding advantages as mentioned for the method according to the first aspect.

According to a fourth aspect, the invention relates to a computer program comprising instructions which, when the program is executed by a computer, cause the computer to carry out the herein described methods.

The computer program has corresponding advantages as mentioned for the method according to the first aspect.

According to a fifth aspect, the invention relates to a computer-readable medium comprising instructions which, when executed by a computer, cause the computer to carry out the herein described methods.

The computer-readable medium has corresponding advantages as mentioned for the method according to the first aspect.

It will be appreciated that all the embodiments described for the method aspect of the invention are applicable also to one or more of the control system aspect, the vehicle aspect, the computer program aspect and the computer-readable medium aspect of the invention. Thus, all the embodiments described for the method aspect of the invention may be performed/implemented by the herein described control system, vehicle, computer program and/or the computer-readable medium. The control system aspect, the vehicle aspect, the computer program aspect and the computer-readable medium aspect, and their embodiments, have advantages corresponding to the advantages mentioned above for the methods and their embodiments. The control system may also be a processing device, i.e. a device.

### Brief list of figures

Embodiments of the invention will be illustrated in more detail below, along with the enclosed drawings, where similar references are used for similar parts, and where:
Figure 1 schematically illustrates an example vehicle, in which aspects and/or embodiments of the present invention may be implemented,
Figure 2 shows a flow chart diagram for a method of a control system for controlling a vehicle speed v of a vehicle when the vehicle travels in at least one curve according to some aspects and/or embodiments of the present the invention,
Figures 3a-b schematically illustrates a non-limiting driving example at which herein presented aspects and/or embodiments of the present invention may be utilized, and how the vehicle speed is controlled according to some herein described aspects and embodiments, and
Figure 4 schematically illustrates a control unit according to various embodiments of the present invention.

### Description of preferred embodiments

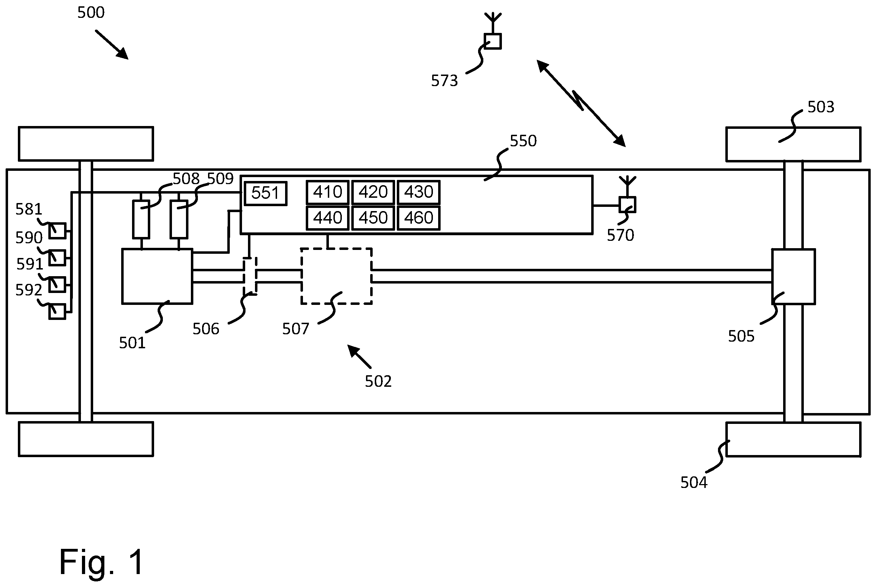

Figure 1 schematically shows an example of a heavy vehicle 500. This example vehicle 500 will be used to explain the herein presented solution and its aspects and embodiments. The aspects and embodiments are, however, not limited to use in vehicles as the ones shown in figure 1, but may also be used in essentially any other type of vehicle.

The vehicle 500 comprises multiple wheels, of which at least one pair of drive wheels 503, 504. The truck 500 furthermore comprises at least one powertrain 502 configured to transfer a torque between at least one power source 501, such as e.g. a combustion engine, at least one electric machine, or a combination of a combustion engine and at least one electric machine, implementing a so-called hybrid drive, to the at least one pair of drive wheels 503, 504. The combustion engine is provided with fuel from a fuel tank 508. The at least one electric machine is provided with electrical energy from at least one voltage energy storage 509, e.g. a battery pack, coupled to the at least one electric machine.

The powertrain 502, and its components, is controlled by at least one control unit/device/system 550. The at least one second energy storage 509 may also be controlled by a control unit/device/system 550.

The torque provided by the at least one power source 501 may be provided to the at least one pair of drive wheels 503, 504 via a central gear 505, such as e.g. a customary differential, and drive shafts connected with the central gear. One or more electric machines may also be arranged essentially anywhere in the vehicle 500, as long as the produced torque is provided to the drive wheels 503, 504, e.g. adjacent to one or more of the drive wheels 503, 504, as is understood by a skilled person.

The vehicle 500 may be braked by utilizing the at least one power source 501, i.e. by utilizing regenerative braking or motor braking. The vehicle 500 may further include at least one braking arrangement arranged at each one of the wheels of the vehicle, where the at least one braking arrangement may be included in a braking system. If the at least one power source 501 comprises a combustion engine, the powertrain 502 of the vehicle 500 may comprise a clutch 506 and a gearbox 507 for providing the torque to the central gear 505. However, if the at least one power source 501 does not comprise a combustion engine, the clutch 506, and possibly also the gearbox 507, may be omitted in the powertrain 502 of the vehicle 500.

The power source 501, is, when the vehicle travels in one or more curves, controlled by a curve speed cruise control system 551, which may be comprised/implemented in the control unit/device/system 550 of the vehicle 500, such that the vehicle speed v of the vehicle 500 is controlled towards a reference speed v_{ref}, as explained below.

The vehicle 500 may further comprise one or more onboard sensors 581. Also, the vehicle 500 may comprise one or more input arrangements 590, 591, 592.

The vehicle 500 may further comprise a communication device 570, being comprised in or connected to the control unit 550. The communication device 570 is configured to communicate with one or more offboard communication devices 573, which may be comprised for example in other vehicles and/or in infrastructure entities, in accordance with a suitable communication protocol and/or standard. The vehicle-to-everything (V2X) information may comprise or be based on determinations and/or observations made by e.g. other vehicles and/or systems of one or more other vehicles having travelled through for example a curve at an earlier time instant. Thus, prior determinations/calculations/estimations may be reused based on this vehicle-to-everything information such that an overall computation complexity for example for a vehicle fleet is reduced. The vehicle-to-everything information may comprise vehicle-to-vehicle (V2V) information and/or everything-to-vehicle (X2V) information.

In figure 1, only the units/devices/entities of the vehicle 500 being useful for understanding the present invention are schematically illustrated. Not all illustrated components have to be comprised in the vehicle, depending on the implementation of the present invention. Further, the control unit/device/system 550 is in figure 1 illustrated as one single unit/device/system. However, as is understood by a skilled person, the control unit/device/system 550 may be implemented by utilization of essentially any number of units/devices/systems, that may be centrally configured in the vehicle 500 and/or may be distributed over the vehicle 500.

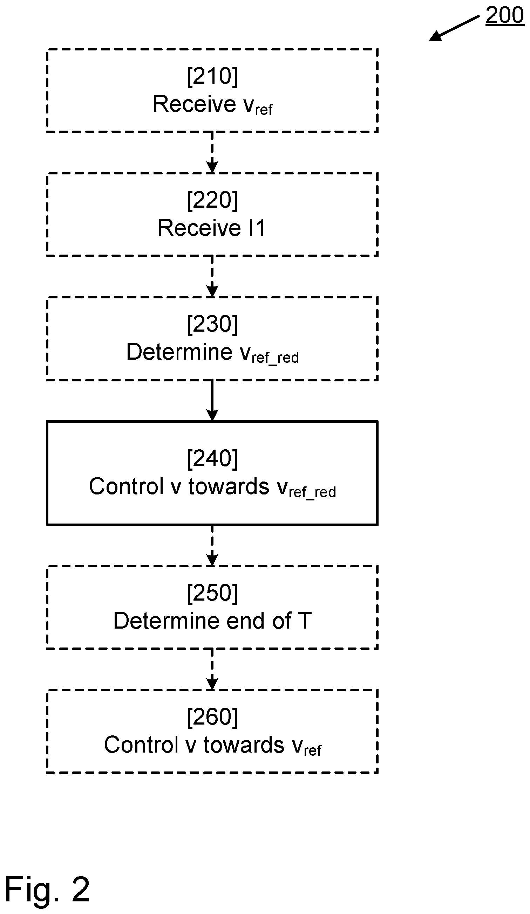

Figure 2 shows a flow chart diagram for a method 200 for controlling a vehicle speed v of a vehicle 500 when the vehicle 500 travels in at least one curve according to some aspects and/or embodiments.

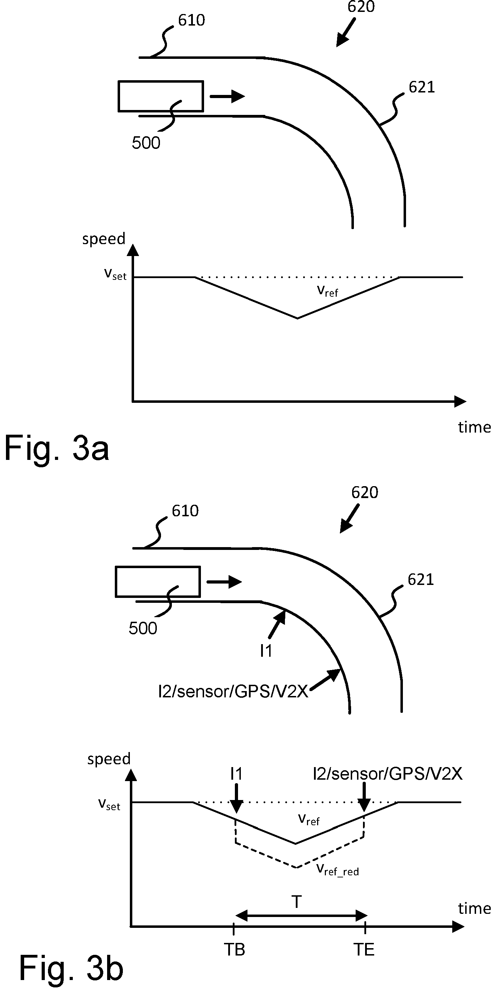

Figures 3a schematically illustrate a non-limiting example of the vehicle 500 travelling a road 610 comprising a curve 620. The speed diagram of figure 3a illustrates a conventional curve speed cruise control system 551 control of the vehicle speed v. Here, the driver has chosen a set speed vₛₑₜ for the cruise control to use on the road 610, the set speed vₛₑₜ being indicated as a dotted line. However, when the vehicle reaches a curve 620 of the road 610, the conventional curve speed cruise control system 551 controls the vehicle speed v towards a reference speed v_{ref} being lower than the chosen set speed; v_{ref} < vₛₑₜ during the curve 620, the reference speed v_{ref} being indicated as a solid line. The vehicle speed v is thus reduced in the curve, and is then raised again after the curve 620, for example to its initial value.

The herein presented method 200, which is schematically illustrated by a non-limiting example shown in figure 3b, comprises the step 240 of controlling, based on a reference speed v_{ref} provided by a curve speed cruise control system 551 of the vehicle 500 and on a first driver input I1 indicating that the reference speed v_{ref} is too high, the vehicle speed v towards a reduced reference speed v_{ref_red} during a limited time period T.

The reduced reference speed v_{ref_red} is here lower than the reference speed v_{ref} provided by the curve speed cruise control system 551, and the curve speed cruise control system 551 is left unaffected by the first driver input 11, i.e. is not deactivated by the first driver input I1. Thus, the curve speed cruise control system 551 stays active also during the limited time period T.

As shown by the non-limiting example of figure 3b, if the driver finds/feels that the reference speed v_{ref}, towards which the vehicle speed v is controlled in the curve 620 by the curve speed cruise control system 551, is too high, then the driver inputs the first driver input I1. Hereby, the vehicle speed v is controlled towards the reduced reference speed v_{ref_red}, which is indicated as a dashed line in the speed diagram of figure 3b and is lower than the reference speed v_{ref} provided by the curve speed cruise control system 551. Thus, the vehicle speed v is hereby even more reduced in the curve 620 than the speed reduction caused by the curve speed cruise control system 551. This means that the control 240 of the vehicle speed v towards the reduced reference speed v_{ref_red} reduces the vehicle speed v below the reference speed v_{ref} of the curve speed cruise control system 551. The vehicle speed v is controlled towards the lower reduced reference speed v_{ref_red} during a limited time period T.

It should be noted that the reduced reference speed v_{ref_red} illustrated by the dashed line in figure 3b is only one non-limiting example of what such a reduced reference speed v_{ref_red} may look like, shown primarily to explain the principles of the herein presented vehicle speed control for a curve. The reduced reference speed v_{ref_red} may thus have another form, shape or scale than the one shown in figure 3b. The reduced reference speed v_{ref_red} may essentially have any form or shape as long as it is lower than the reference speed v_{ref}. For example, the reduced reference speed v_{ref_red} may start and/or end with a step down from and/or up to, respectively, the reference speed v_{ref}, as schematically illustrated in figure 3b. alternatively, the reduced reference speed v_{ref_red} may also start and/or end with a slope down from and/or up to, respectively, the reference speed v_{ref}.

According to an embodiment, the method 200 further comprises a number of steps 210, 220, 230 preceding the step 240 of controlling the vehicle speed v towards the reduced reference speed v_{ref_red}. These steps are shown in figure 2.

In a first step 210, the reference speed v_{ref}, such as for example the reference speed v_{ref} illustrated in figure 3a, is provided by and received from the curve speed cruise control system 551. The curve speed cruise control system 551 has then determined the reference speed v_{ref} based on a number of parameters, such as for example a set speed vₛₑₜ being input by a driver of the vehicle 500 and a curvature of the road.

In a second step 220, the first driver input I1 is received from an input arrangement 590 of the vehicle 500, as schematically illustrated in figure 3b.

In a third step, 230, the reduced reference speed v_{ref_red} is determined based on the received reference speed v_{ref} and the received first driver input I1.

The determined reduced reference speed v_{ref_red} is then utilized for controlling 240 the vehicle speed v towards the lower reduced reference speed v_{ref_red} during the limited time period T, i.e. from a beginning TB of the time period T, which may essentially coincide with the input of the first driver input I1, as illustrated in figure 3b. Alternatively, the time period T may begin TB a time offset after the first driver input I1 has been received. As mentioned in detail below, the limited time period T may come to an end TE due to a second driver input I2, for example an accelerator pedal input, being provided by the driver. Also, the limited time period T may come to an end TE because the vehicle has passed the at least one curve, or at least has passed a sharpest point of the at least one curve, which may be indicated by sensor-based information, positioning information combined with map data and/or vehicle-to-everything information. The actual length of the limited time period may thus depend on for example the curvature of the at least one curve, the speed of the vehicle, and/or the actions of the driver.

According to an embodiment, the first driver input I1 is provided by utilization of at least one braking input arrangement 591 of the vehicle 500, where the at least one braking input arrangement 591 may comprise an auxiliary brake lever and/or a brake pedal of the vehicle. Thus, the driver of the vehicle here activates the braking input arrangement 591, e.g. pushes down the brake pedal or shifts the auxiliary brakes lever, and thereby provides the first driver input I1 to the control system 550.

For example, the auxiliary brake lever may be put into a first position, into a brake lever position 1, in order to input the first driver input.

According to an embodiment, the hereby provided first driver input I1 is associated with a driver brake demand magnitude DB. For example, if the driver pushes the brake pedal harder, the higher the driver brake demand magnitude DB will be.

Correspondingly, the reference speed v_{ref} may be associated with a curve speed cruise control system brake demand magnitude SB, such that the curve speed cruise control system brake demand magnitude SB will be higher if the road has one or more sharp curves. Thus, the harder the vehicle should be braked due to the curvature of the road, the higher the curve speed cruise control system brake demand magnitude SB will be.

The reduced reference speed v_{ref_red} may then be determined 230 based also on the driver brake demand magnitude DB and the curve speed cruise control system brake demand magnitude SB, as described in the following paragraphs.

According to an embodiment, the reduced reference speed v_{ref_red} is determined 230 based on a sum of the driver brake demand magnitude DB and the curve speed cruise control system brake demand magnitude SB, which might lead to the reduced reference speed v_{ref_red} being considerably lower than the reference speed v_{ref}.

According to an embodiment, the reduced reference speed v_{ref_red} is determined 230 based on a highest magnitude of the driver brake demand magnitude DB and the curve speed cruise control system brake demand magnitude SB. Thus, only the one of the driver brake demand and the curve speed cruise control system brake demand having the highest magnitude is here taken into consideration when determining 230 the reduced reference speed v_{ref_red}.

According to an embodiment, the reduced reference speed v_{ref_red} is determined 230 based on a ratio R between a driver influenced speed v_{driver} resulting from a completed braking of the vehicle 500, for example when the brake pedal is released after having been activated for a while to reduce the vehicle speed v by utilization of the driver brake demand magnitude DB, and the reference speed v_{ref}; R = v_{driver} / v_{ref}.

For example, if the curve speed cruise control system 551 controls the vehicle speed to be 60 km/h, and the driver brakes the vehicle down to a vehicle speed of 54 km/h by utilizing e.g. the brake pedal, the ratio R is determined as R = v_{driver} / v_{ref} = 54 / 60 = 0.9. For the at least one curve currently being travelled, this ration R can then be used for scaling down the reference speed v_{ref} provided by the curve speed cruise control system 551 with the ratio R, such that the reduced reference speed v_{ref_red} is equal to the ratio R times the reference speed v_{ref}; v_{ref_red} = R * v_{ref} = 0.9 * v_{ref}.

According to some embodiments illustrated in the flow chart diagram in figure 2, it is in a further step 250 determined that the limited time period T, during which the vehicle speed v is controlled 240 towards the reduced reference speed v_{ref_red}, has come to an end. It is thus here determined 250 that the vehicle speed should be controlled 260 towards the reference speed v_{ref} again.

This is schematically illustrated in figure 3b, where the reduced reference speed v_{ref_red} coincides with the reference speed v_{ref} when the vehicle 500 has almost reached an end of the curve 620. Thus, after this point in time, the vehicle speed v is controlled 260 towards the reference speed v_{ref} again.

According to an embodiment, it is determined 250 that the vehicle speed should be controlled towards the reference speed v_{ref} based on sensor information provided by one or more onboard sensors 581 of the vehicle if the sensor information indicates that the vehicle 500 has passed a sharpest point 621 of the at least one curve 620, also called apex of the at least one curve, and that an end TE of the limited time period T thereby has been reached. Thus, the limited time period T here ends TE when the vehicle passes the sharpest point 621 of the at least one curve. According to an embodiment, the sharpest point 621 is defined as a short road segment ending at, and including, the sharpest point 621.

The one or more onboard sensors 581 may comprise a camera, a radar system, an ultrasonic system and/or a lidar system. Essentially any sensor system useful for determining a curvature of the road travelled by the vehicle may be used for providing this sensor information.

According to an embodiment, it is determined 250 that the vehicle speed should be controlled towards the reference speed v_{ref} based on positioning information, for example global positioning system (GPS) information, and map data. The positioning information and map data here indicate that the vehicle 500 has passed a sharpest point 621 of the at least one curve 620 and that an end TE of the limited time period T thereby has been reached. Thus, the limited time period T here ends TE when the vehicle passes the sharpest point 621 of the at least one curve Thus, after this point in time, the vehicle speed v is controlled 260 towards the reference speed v_{ref} again.

According to an embodiment, it is determined 250 that the vehicle speed should be controlled towards the reference speed v_{ref} based on a second driver input I2. The second driver input I2 then indicates that an end TE of the limited time period T has been reached, i.e. the limited time period T comes to an end TE when the second driver input I2 is provided by the driver. Thus, after this point in time, the vehicle speed v is controlled 260 towards the reference speed v_{ref}, in accordance with such a specific second driver input I2 being input by the driver when the driver thinks it is acceptable to increase the vehicle speed v again. One non-limiting example of the input of the second driver input I2, and how the second driver input I2 influences the reduced reference speed v_{ref_red} is schematically illustrated in figure 3b.

According to various embodiments, the second driver input I2 is provided by utilization of at least one input arrangement 592, for example an accelerator pedal, a resume button of a cruise control input arrangement of the vehicle 500, an increase set speed button of a cruise control input arrangement of the vehicle 500, a physical button of the vehicle 500, a digital button of the vehicle 500 and/or a voice input arrangement of the vehicle 500. Essentially any input arrangement may be utilized for receiving the second driver input I2.

For example a short dab/blip on the accelerator pedal/throttle may be interpreted as the second driver input I2. Alternatively, if the driver uses the accelerator pedal to accelerate the vehicle to reach reference speed v_{ref} again, this may be interpreted as the second driver input I2. As another example, if the first driver input I1 has been provided by putting the auxiliary brake lever into its first position, i.e. into the brake lever position 1, as mentioned above, then the second driver input I2 may be provided by putting the auxiliary brake lever into an off position.

According to an embodiment, it is determined 250 that the vehicle speed should be controlled towards the reference speed v_{ref} based on vehicle-to-everything (V2X) information, e.g. received by the communication device 570. The vehicle-to-everything information then indicates that an end TE of the limited time period T has been reached, and that the vehicle speed v should be controlled 260 towards the reference speed v_{ref} after this point in time. Thus, the limited time period T here comes to an end TE when the on vehicle-to-everything information is received and/or detected.

In figure 3b, the "reference I2/sensor/GPS/V2X" indicates that the second driver input I2, the sensor information, the positioning information and map data, and/or the vehicle-to-everything information have been received and/or indicate that the end TE of the limited time period T has been reached, and that the vehicle speed v should be controlled 260 towards the reference speed v_{ref} again. It should be noted that the return to controlling 260 the vehicle speed v towards the reference speed v_{ref} again may coincide with the reception and/or indication of the second driver input I2, the sensor information, the positioning information and map data, and/or the on vehicle-to-everything information, as illustrated in figure 3b. Alternatively, the time period T may end TE a time offset after the reception and/or indication of the second driver input I2, the sensor information, the positioning information and map data, and/or the on vehicle-to-everything information.

According to an aspect, a control system 550 configured to control a vehicle speed v of a vehicle 500 when the vehicle 500 travels in at least one curve 620 is presented.

The control system 550 is configured to control 240, based on a reference speed v_{ref} provided by a curve speed cruise control system 551 of the vehicle 500 and on a first driver input I1 indicating that the reference speed v_{ref} is too high, the vehicle speed v towards a reduced reference speed v_{ref_red} during a limited time period T, as explained above. The reduced reference speed v_{ref_red} is here lower than the reference speed v_{ref}, and the curve speed cruise control system 551 is unaffected by the first driver input I1, i.e. the curve speed cruise control system 551 is not deactivated by the first driver input I1.

According to various embodiments, the control system 550 is configured to perform the herein described method aspect and its embodiments.

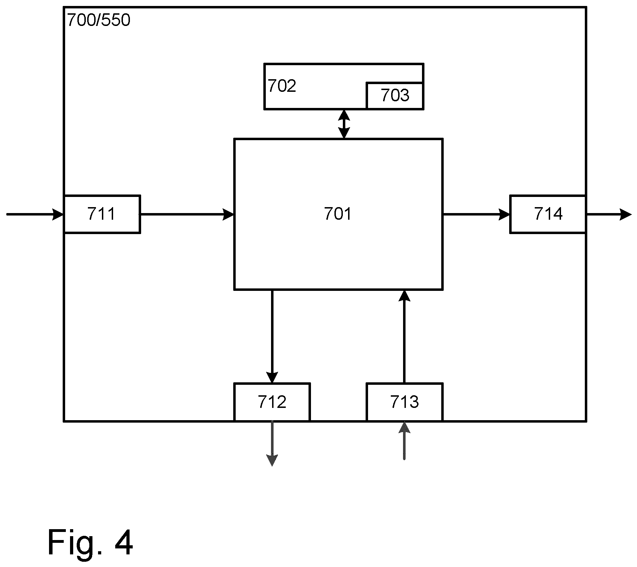

Figure 4 shows in schematic representation a control unit 700/550. The control unit 700/550 comprises a computing unit 701, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 701 is connected to a memory unit 702 arranged in the control unit 700/550, which memory unit provides the computing unit 701 with, for example, the stored program code and/or the stored data which the computing unit 701 requires to be able to perform computations. The computing unit 701 is also arranged to store partial or final results of computations in the memory unit 702.

In addition, the control unit 700/550 is provided with devices 711, 712, 713, 714 for receiving and transmitting input and output signals. These input and output signals can contain waveforms, impulses, or other attributes which, by the devices 711, 713 for the reception of input signals, can be detected as information and can be converted into signals which can be processed by the computing unit 701. These signals are then made available to the computing unit 701. The devices 712, 714 for the transmission of output signals are arranged to convert signals received from the computing unit 701 in order to create output signals by, for example, modulating the signals, which can be transmitted to other parts of and/or systems in the vehicle.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; an ethernet connection; or by a suitable wireless connection. A person skilled in the art will appreciate that the above-stated computer can be constituted by the computing unit 701 and that the above- stated memory can be constituted by the memory unit 702.

Control systems in modern vehicles commonly comprise communication bus systems consisting of one or more communication buses for linking a number of electronic control units (ECU's), or controllers, and various components located on the vehicle. Such a control system can comprise a large number of control units and the responsibility for a specific function can be divided amongst more than one control unit. Vehicles of the shown type thus often comprise significantly more control units than are shown in figures 1 and 4, which is well known to the person skilled in the art within this technical field.

In a shown embodiment, the present invention may be implemented by the one or more herein mentioned control units or processing arrangements 700/550. The invention can also, however, be implemented wholly or partially in one or more other control units already present in the vehicle, or in some control unit dedicated to the present invention.

Here and in this document, control units, control entities or processing arrangements are sometimes described as being arranged for performing the methods and/or steps 210, 220, 230, 240, 250, 260 according to the invention. This also includes that the units, entities or processing arrangements are designed to and/or configured to perform these method steps.

One or more control entities 410, 420, 430, 440, 450, 460 may be arranged for performing the methods and/or steps. Such entities 410, 420, 430, 440, 450, 460 may be arranged as separate entities, or may be logically separated but physically implemented in the same unit, or may be both logically and physically arranged together. These control entities 410, 420, 430, 440, 450, 460 may for example correspond to groups of instructions, which can be in the form of programming code, that are input into, and are utilized by a processor/computing unit 701 when the entities are active and/or are utilized for performing its method steps, respectively.

The present invention is not limited to the above described embodiments. Instead, the present invention relates to, and encompasses all different embodiments being included within the scope of the independent claims.

## Claims

1. A method (200) of a control system (550) for controlling a vehicle speed v of a vehicle (500) when the vehicle (500) travels in at least one curve (620),
the method (200) comprising:
- controlling (240), based on a reference speed v_{ref} provided by a curve speed cruise control system (551) of the vehicle (500) and on a first driver input (11) indicating that the reference speed v_{ref} is too high, the vehicle speed v towards a reduced reference speed v_{ref_red} during a limited time period (T);
wherein:
- the reduced reference speed v_{ref_red} is lower than the reference speed v_{ref}; and
- the curve speed cruise control system (551) is unaffected by the first driver input (I1).

2. The method (200) as claimed in claim 1, the method (200) further comprising:
- receiving (210) the reference speed v_{ref} from the curve speed cruise control system (551);
- receiving (220) the first driver input (11) from an input arrangement (590); and
- determining (230) the reduced reference speed v_{ref_red} based on:
-- the received reference speed v_{ref}; and
-- the received first driver input (11).

3. The method (200) as claimed in any one of claims 1-2, wherein
- the first driver input (11) is associated with a driver brake demand magnitude (DB);
- the reference speed v_{ref} is associated with a curve speed cruise control system brake demand magnitude (SB); and
- the reduced reference speed v_{ref_red} is determined (230) based also on one in the group of:
- a sum of the driver brake demand magnitude (DB) and the curve speed cruise control system brake demand magnitude (SB);
- a highest magnitude of the driver brake demand magnitude (DB) and the curve speed cruise control system brake demand magnitude (SB); and
- a ratio R between a driver influenced speed v_{driver} resulting from a completed braking of the vehicle (500) utilizing the driver brake demand magnitude (DB) and the reference speed v_{ref}; R = v_{driver} / Vref.

4. The method (200) as claimed in any one of claims 1-3, wherein the first driver input (11) is provided by utilization of at least one braking input arrangement (591) of the vehicle (500).

5. The method (200) as claimed in claim 4, wherein the at least one braking input arrangement (591) comprises one or more in the group of:
- an auxiliary brake lever; and
- a brake pedal.

6. The method (200) as claimed in any one of claims 1-5, further comprising:
- controlling (260), based on sensor information provided by one or more onboard sensors (581), the vehicle speed v towards the reference speed v_{ref}, wherein the sensor information indicates that the vehicle (500) has passed a sharpest point (621) of the at least one curve (620) and that an end (TE) of the limited time period (T) thereby has been reached.

7. The method (200) as claimed in claim 6, wherein the one or more onboard sensors (581) comprise at least one in the group of:
- a camera;
- a radar system;
- an ultrasonic system; and
- a lidar system.

8. The method (200) as claimed in any one of claims 1-7, further comprising:
- controlling (260), based on positioning information and map data, the vehicle speed v towards the reference speed v_{ref}, wherein the positioning information and map data indicate that the vehicle (500) has passed a sharpest point (621) of the at least one curve (620) and that an end (TE) of the limited time period (T) thereby has been reached.

9. The method (200) as claimed in any one of claims 1-8, further comprising:
- controlling (260), based on a second driver input (12), the vehicle speed v towards the reference speed v_{ref}, wherein the second driver input (12) indicates that an end (TE) of the limited time period (T) has been reached.

10. The method (200) as claimed in claim 9, wherein the second driver input (12) is provided by utilization of at least one input arrangement (592) in the group of:
- an accelerator pedal;
- a resume button of a cruise control input arrangement of the vehicle (500);
- an increase set speed button of a cruise control input arrangement of the vehicle (500);
- a physical button of the vehicle (500);
- a digital button of the vehicle (500); and
- a voice input arrangement of the vehicle (500).

11. The method (200) as claimed in any one of claims 1-10, further comprising:
- controlling (260), based on vehicle-to-everything information, the vehicle speed v towards the reference speed v_{ref}, wherein the vehicle-to-everything information indicates that an end (TE) of the limited time period (T) has been reached.

12. The method (200) as claimed in any one of claims 1-11, wherein the curve speed cruise control system (551) stays active during the limited time period (T).

13. A computer program comprising instructions which, when the program is executed by a computer, cause the computer to carry out the method according to any one of claims 1-12.

14. A computer-readable medium comprising instructions which, when executed by a computer, cause the computer to carry out the method according to any one of claims 1-12.

15. A control system (550) configured to control a vehicle speed v of a vehicle (500) when the vehicle (500) travels in at least one curve (620), wherein the control system (550) is configured to:
- control (240), based on a reference speed v_{ref} provided by a curve speed cruise control system (551) of the vehicle (500) and on a first driver input (11) indicating that the reference speed v_{ref} is too high, the vehicle speed v towards a reduced reference speed v_{ref_red} during a limited time period (T);
wherein:
- the reduced reference speed v_{ref_red} is lower than the reference speed v_{ref}; and
- the curve speed cruise control system (551) is unaffected by the first driver input (I1).

16. A vehicle (500) comprising a control system (550) as claimed in claim 15.
